# EUROPÄISCHE PATENTSCHRIFT

(11) **EP 3 762 515 B1**
(45) Veröffentlichungstag und Bekanntmachung des Hinweises auf die Patenterteilung: **01.06.2022**
(21) Anmeldenummer: 19709465.9
(22) Anmeldetag: 06.03.2019
(51) Int. Cl.: C21C 5/52, F27B 3/22, F27D 3/16

(54) **VERFAHREN ZUM ANORDNEN EINES SAUERSTOFFINJEKTORS AN EINEM METALLURGISCHEN SCHMELZAGGREGAT**
METHOD FOR ARRANGING AN OXYGEN INJECTOR ON A METALLURGICAL SMELTING UNIT
PROCÉDÉ D'AGENCEMENT D'UN INJECTEUR D'OXYGÈNE AU NIVEAU D'UN AGRÉGAT DE MASSE FONDUE MÉTALLURGIQUE

(30) Priorität: 08.03.2018 DE 102018203478; 26.11.2018 DE 102018220242
(43) Veröffentlichungstag der Anmeldung: 13.01.2021
(73) Patentinhaber: SMS Group GmbH, 40237 Düsseldorf (DE)
(72) Erfinder: ODENTHAL, Hans-Jürgen, 40822 Mettmann (DE); STARKE, Peter, 47228 Duisburg (DE); SCHÜRING, Andreas, 45475 Mülheim (DE); NIEKAMP, Mark, 42699 Solingen (DE); BERGS, Alexander, 48429 Rheine (DE); FRANKENBERGER, Arnd, 42799 Leichlingen (DE)
(74) Vertreter: Kross, Ulrich
(86) Internationale Anmeldenummer: PCT/EP2019/055493
(87) Internationale Veröffentlichungsnummer: WO 2019/170699

(56) Entgegenhaltungen:
- WO-A1-2010/145845
- WO-A1-2013/068807
- DE-A1- 19 637 246
- US-A1- 2002 001 332

## Beschreibung

Die Erfindung betrifft ein Verfahren zum Anordnen eines eine Laval-Düse aufweisenden Sauerstoffinjektors an einer Seitenwand eines metallurgischen Schmelzaggregats, wobei der Sauerstoffinjektor in einem Injektorgehäuse mit einer Auslassöffnung angeordnet wird, das derart von außerhalb des Schmelzaggregats an einer Injektoröffnung an der Seitenwand angeordnet wird, dass das Injektorgehäuse teilweise nach innen in das Schmelzaggregat hineinragt.

DE 10 2013 226 109 A1 offenbart einen Injektor mit Koaxialstrahl für ein metallurgisches Schmelzaggregat. Solche Injektoren dienen zum Auf- und Einblasen von Sauerstoff bzw. eines sauerstoffreichen Gases auf bzw. in eine Metallschmelze in dem Schmelzaggregat, um die Metallschmelze zu entkohlen und gleichzeitig eine reaktionsfähige, schützende Schaumschlackenschicht über der Metallschmelze aufzubauen. Ferner dienen solche Injektoren auch dazu, durch das gezielte Einbringen an chemischer Energie in Form brennbarer Gase den anfänglich in einen Lichtbogenofen vorhandenen Schrott aufzuschmelzen. Moderne Injektoren können zwischen diesen beiden Verfahrensmodi, d. h. zwischen dem Injektorbetrieb und dem Brennerbetrieb, umschalten. Ein Injektor beschleunigt das sauerstoffreiche Gas, meist reiner Sauerstoff, auf

Überschallgeschwindigkeit (Ma > 1). Solche Geschwindigkeiten können mit einer Laval-Düse erzielt werden, die hier als Primärdüse verwendet wird. In der US 2002001332A wird ebenfalls ein Sauerstoffinjektor für ein metallurgisches Gefäss beschrieben.

Strömungstechnische optimierte Laval-Düsen, werden für Injektoren und Blaslanzen zum definierten Einsatz in metallurgischen Anlagen (Elektrolichtbogenofen (EAF), Reduktionsofen (SAF), Konverter (AOD, BOF), Sekundärmetallurgischen Anlage (VOD, RH) etc.) eingesetzt.

Die Funktion der Laval-Düse sei am Beispiel des Einsatzes im EAF erläutert: Seit Mitte der 1990er Jahre werden Erdgasbrenner zum Schmelzen und Überhitzen von Schrott bzw. Eisen im EAF eingesetzt, um den Bedarf an elektrischer Energie zu senken und die Produktivität zu steigern. Während die eingebrachte Energie und damit die Einschmelzleistung in der Ofenmitte am höchsten sind, bilden sich im Bereich der Ofenwände so genannte cold spots. Hier kann durch den Einbau von Brennern in die Ofenwand zusätzliche chemische Energie eingebracht werden. Des Weiteren muss die Schmelze durch das Einblasen von Sauerstoff entkohlt werden. Moderne Injektoren weisen meist eine kombinierte Brenner-/Sauerstoffinjektor-Technologie auf.

Der Injektor ist somit ein kombiniertes System zum Aufschmelzen von Schrott und zum Frischen der Metallschmelze. Ein solcher Injektor weist üblicherweise einen Flammenerzeuger und eine Brenner-/Sauerstoffinjektor-Einheit auf. Zudem weist der Injektor eine zentral angeordnete Laval-Düse (Überschall) und eine koaxiale Ringspaltdüse (Unterschall) auf. Der Injektor kann in unterschiedlichen Betriebsmodi, nämlich dem Pilotmodus, dem Brennermodus und dem Injektormodus arbeiten.

Der Pilotmodus ist ein Bereitschaftsmodus und bei inaktivem Injektor vorgesehen. In dem Pilotmodus erzeugt der Flammenerzeuger eine Pilotflamme aus einem Verbrennungsgas, insbesondere Erdgas, das mit einer Zündkerze gezündet wird. Die Flammenüberwachung erfolgt mit einer lonisationselektrode und einer Auswerteelektronik. Die Pilotflamme vermeidet, dass Schlacken- und Schmelzentropfen am Injektor anhaften. Eine spezielle Düsengeometrie mit der zurückgezogenen, zentralen Primärdüse und dem konzentrisch angeordneten Ringspalt kann das Verstopfen der Laval-Düse durch Spritzeffekte seitens der Metallschmelze und der Schlacke verhindern.

Im Brennermodus wird dem EAF thermische Energie zugeführt. Sauerstoff und Erdgas werden unverbrannt durch den Injektor gefördert und vermischen sich im Ofen zu einem brennbaren Gemisch, das durch die Ofenatmosphäre zündet. Eine separate Zündung mittels Zündkerze ist nicht erforderlich. Die dabei gebildete leistungsstarke Flamme unterstützt das Einschmelzen des Schrotts in kalten Bereichen und homogenisiert das Einschmelzbild.

In einer Flachbadphase wird auf den Injektormodus umgeschaltet. Zur schnellen Entkohlung der Metallschmelze ist die optimale Wechselwirkung von Sauerstoff und Metallschmelze ausschlaggebend. Dies wird erreicht durch einen Überschallstrahl, der mit etwa zweifacher Schallgeschwindigkeit aus der Laval-Düse austritt und mit hohem Impuls auf die Metallschmelze trifft. Der integrierte Heißgaserzeuger liefert, ähnlich wie beim Pilotmodus, einen Hüllstrahl aus heißem Verbrennungsgas, das den kalten Sauerstoffstrahl umhüllt und dadurch die Länge des Überschallbereiches vergrößert. Im Injektormodus, also beim Aufblasen von Sauerstoff mit einer einzelnen Primärdüse auf die Schmelzenoberfläche, ist es das primäre Ziel, die Metallschmelze möglichst effizient und effektiv zu entkohlen und gleichzeitig auch eine gute Schaumschlacke im EAF zu erzeugen, um die umgebenden Ofenbauteile vor der extrem heißen Lichtbogenstrahlung abzuschirmen.

Da ein Injektor üblicherweise in eine Seitenwand des Ofens eingebaut wird und in dem eingebauten Zustand unter einem Anstellwinkel von etwa 40° bis 45° angeordnet ist, muss der aus der Laval-Düse austretende Sauerstoffstrahl unter Umständen lange Wegstrecken von bis zu 3 m überwinden, um zur Schmelzenoberfläche zu gelangen. Daher wird es erforderlich, einen möglichst langen, kohärenten Sauerstoff-Überschallstrahl zu erzeugen, der mit einem hohen Strahlimpulsstrom bzw. Strahlkraft auf die Schmelzenoberfläche trifft. Nur in diesem Fall ist eine gute Entkohlung bei gleichzeitig intensiver Vermischung der Metallschmelze möglich.

Die Laval-Düse weist einem konvergenten Einströmbereich (Unterschallteil) und einen divergenten Ausströmbereich (Überschallteil) auf, die über einen engeren Düsenhals miteinander verbunden sind. Im Unterschallteil wird der Sauerstoff beschleunigt und er erreicht im engsten Querschnitt, also dem Düsenhals, erstmals Schallgeschwindigkeit (Ma = 1) und beschleunigt infolge der Expansion des Sauerstoffs im divergenten Ausströmbereich weiter. Typischerweise tritt der Sauerstoff mit zweifacher Schallgeschwindigkeit (Ma = 2) aus der Laval-Düse aus. Hierbei ist die Machzahl das Verhältnis aus lokaler Gasgeschwindigkeit und Schallgeschwindigkeit.

US 7 858 018 B2 offenbart eine Montage- bzw. Befestigungsanordnung für einen Brenner oder eine Lanze mit einem Austragsende in einem Ofen mit einer Schmelzkammer aus feuerfestem Material, die geschmolzenes Metall sammelt, und einer Vielzahl von durch ein Fluid gekühlten Platten, die eine Seitenwand bilden, und mit einer Stufe zwischen der Seitenwand und der Schmelzkammer. Die Montageanordnung weist einen Montageblock mit einer Breite, die ungefähr der Breite der feuerfesten Stufe entspricht, auf, wobei der Montageblock eine erste Öffnung aufweist, die dazu bestimmt ist, den Brenner oder die Lanze aufzunehmen. Zudem weist die Montageanordnung eine Wandplatte mit einer zweiten Öffnung auf, die dazu bestimmt ist, den Brenner oder die Lanze aufzunehmen und mit der ersten Öffnung fluchtet. Das Austragsende des Brenners oder der Lanze, nachdem er bzw. sie durch die erste und zweite Öffnung aufgenommen wurde, ragt über die Stufe hinaus.

EP 1 857 760 A1 offenbart einen Schmelzofen mit einer Schmelzofenwand, einer Trennfuge, einer Spiegellinie und einer konischen Brenner-Panel-Vorrichtung, die innerhalb des Ofens montiert ist. Die Brenner-Panel-Vorrichtung weist ein wassergekühltes konisches Brenner-Panel mit geformten Nuten, wenigstens eine Vorrichtungsöffnung und wenigstens eine Vorrichtung auf. Das wassergekühlte konische Brenner-Panel erstreckt sich über die Schmelzofenwand hinaus zumindest bis zur Trennfuge des Schmelzofens. Die Vorrichtung ist eine zusätzliche Wärmeenergiequelle, ein Partikelinjektor oder ein Sauerstoffinjektor.

CN 101 139 641 B offenbart ein Verfahren zum Kühlen eines spitz zulaufenden Ofenbrennerpanels, das mindestens eine Vorrichtung aufnimmt, wobei das Brennerpanel mehrere Oberflächen aufweist, die eine obere Oberfläche, eine untere Oberfläche, eine vordere Seitenoberfläche und mehrere Seitenoberflächen aufweisen, wobei sich das Brennerpanel von einer Ofenwand weg zu mindestens einer Trennlinie des Ofens erstreckt und zum Einbringen von Wärmeenergie aus der Vorrichtung in den Ofen ausgelegt ist. Das Verfahren weist die folgenden Schritte auf: Befestigen einer Leitung, wobei das Brennerpanel um die Leitung gegossen wird, die in einer Schlangenlinienform entlang eines Abschnitts von mindestens einer Oberfläche des Brennerpanels geformt ist, wobei die Leitung Wärme vom Brennerpanel abführt, wenn eine Kühlflüssigkeit durch die Leitung fließt und wobei die Schlangenlinienform einen Mindestradius aufweist; und Koppeln der Leitung an einen Kühlsystemanschluss, wobei sich der Kühlsystemanschluss im Inneren der Ofenwand befindet.

US 8 142 711 B2 offenbart ein geschmiedetes Kupferbrennergehäuse, das in der Seitenwand eines Stahlschmelzofens angebracht werden kann, um einer Brennerlanze eine verbesserte Kühlcharakteristik zu verleihen. Das Brennergehäuse ist mit einem zentralen Durchgang versehen, der angepasst ist, um eine Brennerlanze zum Einspritzen von Sauerstoff in die Metallschmelze innerhalb eines Elektrolichtbogenofens aufzunehmen. Das Brennergehäuse ist so positioniert, dass sich im eingebauten Zustand nur eine massive, geschmiedete Kupferfläche auf der Ofenseite befindet. Das Brennergehäuse weist ein optionales Durchgangsloch auf, das für den Zweck der Behandlung der Metallschmelze mit einer Partikelzufuhr, die von schlackenbildenden Materialien zu metallurgischen Materialien reicht, verwendet werden kann. Das Brennergehäuse weist ferner eine Anzahl von Kühlmittellöchern und -rohren auf, die eine einzigartige bidirektionale Strömung von Kühlfluid durch jedes Loch bereitstellen und die Kühlfluidgeschwindigkeit erhöhen, während Strömungsabrisse und heiße Stellen des Kühlfluids verringert werden, wodurch eine bessere Wärmeübertragung und bessere physikalische Eigenschaften erzielt werden.

EP 1 553 192 A2 offenbart eine Vorrichtung zur Aufnahme mindestens eines Injektors, mit dem Medien, wie Sauerstoff und/oder kohlenhaltige Brennstoffe, in einen Schmelzofen, insbesondere einen Elektrolichtbogenofen, eingebracht werden, wobei mittels der Aufnahmevorrichtung der jeweilige Injektor geschützt an oder in der Ofenwand des Schmelzofens angeordnet ist. Die Aufnahmevorrichtung ist mehrteilig ausgebildet mit einem unteren Bodenteil, einem oberen Dachteil und Seitenwänden, die separat voneinander auswechselbar sind.

EP 1 739 374 A2 offenbart ein Wandelement für einen metallurgischen Ofen, insbesondere einen Lichtbogenofen, bestehend aus einem unteren Bereich und einem oberen Bereich, in dessen unterem Bereich mindestens ein Injektor zum Injizieren von Gas, wie z.B. Sauerstoff oder Feststoffen, angeordnet ist. Der obere Bereich ist aus beabstandeten Rohren gebildet.

Eine Aufgabe der Erfindung ist es, die Behandlung einer Metallschmelze in einem metallurgischen Schmelzaggregat mittels eines an einer Seitenwand des Schmelz-aggregats angeordneten Sauerstoffinjektors zu verbessern.

Diese Aufgabe wird durch die unabhängigen Patentansprüche gelöst. Vorteilhafte Ausgestaltungen sind in der nachfolgenden Beschreibung, den abhängigen Patentansprüchen und der Figur wiedergegeben, wobei diese Ausgestaltungen jeweils für sich genommen oder in Kombination von wenigstens zwei dieser Ausgestaltungen miteinander einen weiterbildenden, insbesondere auch bevorzugten oder vorteilhaften, Aspekt der Erfindung darstellen können. Ausgestaltungen des Verfahrens können dabei Ausgestaltungen des metallurgischen Schmelzaggregats entsprechen, und umgekehrt, selbst wenn im Folgenden hierauf im Einzelfall nicht explizit hingewiesen wird.

Gemäß einem erfindungsgemäßen Verfahren zum Anordnen eines eine Laval-Düse aufweisenden Sauerstoffinjektors an einer Seitenwand eines metallurgischen Schmelzaggregats wird der Sauerstoffinjektor in einem Injektorgehäuse mit einer Auslassöffnung angeordnet, das derart von außerhalb des Schmelzaggregats an einer Injektoröffnung an der Seitenwand angeordnet wird, dass das Injektorgehäuse teilweise nach innen in das Schmelzaggregat hineinragt. Zudem wird eine Einbauhöhe einer Auslassöffnung der Laval-Düse über einer Oberfläche einer in dem Schmelzaggregat enthaltenen Schmelze unter Berücksichtigung eines Sauerstoffdrucks in einem Einlassbereich der Laval-Düse, eines Sauerstoffvolumenstroms durch die Laval-Düse und eines Anstellwinkels der Laval-Düse ermittelt und der Sauerstoffinjektor in Abhängigkeit der ermittelten Einbauhöhe an der Seitenwand angeordnet.

Erfindungsgemäß kann die zunächst unbekannte Einbauhöhe H der Laval-Düse über der Oberfläche der in dem Schmelzaggregat enthaltenen Schmelze beispielsweise als Funktion des Sauerstoffdrucks in dem Einlassbereich der Laval-Düse, des Sauerstoffvolumenstroms durch die Laval-Düse und des Anstellwinkels der Laval-Düse definiert werden. Hierdurch kann die Höhe optimal an die jeweiligen Gegebenheiten angepasst werden, um die Behandlung einer Metallschmelze in dem metallurgischen Schmelzaggregat mittels des an der Seitenwand des Schmelzaggregats angeordneten Sauerstoffinjektors zu verbessern.

Das Injektorgehäuse wird von außerhalb des metallurgischen Schmelzaggregats an der Injektoröffnung an der Seitenwand angeordnet, was bedeutet, dass das Injektorgehäuse von außen an die Seitenwand herangeführt wird, bis ein Teil des Injektorgehäuses durch die Injektoröffnung hindurch in das Schmelzaggregat hineinragt, wobei das Injektorgehäuse zudem von außerhalb des Schmelzaggregats an der Seitenwand fixiert wird. Das Injektorgehäuse wird also nicht, wie herkömmlich, an eine Innenseite der Seitenwand herangeführt und an dieser Innenseite befestigt. Durch die Auslassöffnung kann der aus dem Sauerstoffinjektor austretende Sauerstoffstrahl aus dem Injektorgehäuse, vorzugsweise ungestört, austreten. Eine Unterkante des Injektorgehäuses kann etwa in derselben Einbauhöhe über der Oberfläche der Schmelze angeordnet sein wie die Auslassöffnung der Laval-Düse. Die Laval-Düse und das umgebende Injektorgehäuse sollten in einer Einbauhöhe über der Oberfläche der Schmelze angeordnet werden, die ein Verschmutzen des Injektorgehäuses bzw. der Laval-Düse durch verspritzte Schmelze weitestgehend vermeidet und trotzdem einen gewünschten Sauerstoffeintrag in die Schmelze ermöglicht.

Der Anstellwinkel der Laval-Düse ist ein Winkel ungleich Null relativ zur Vertikalen, der einen Einstrahlwinkel des Sauerstoffstrahls auf die Oberfläche der Schmelze definiert. Der Anstellwinkel (und ein in der Horizontalen liegender Winkel der Laval-Düse) ist vorzugsweise derart gewählt, dass der Sauerstoffstrahl nicht auf Schmelzelektroden des Schmelzaggregats bzw. nicht in einen Bereich gerichtet ist, in dem die Schmelzelektroden bewegt werden. Zudem sollte der Anstellwinkel (und der in der Horizontalen liegende Winkel der Laval-Düse) derart gewählt werden, dass der Sauerstoffstrahl nicht zu nahe am Rand der Schmelze auf die Feuerfestzustellung trifft.

Zum Anordnen des die Laval-Düse aufweisenden Sauerstoffinjektors an der Seitenwand des metallurgischen Schmelzaggregats können also die gewünschten Strahlparameter (Sauerstoffdruck im Einlassbereich der Laval-Düse, Sauerstoffvolumenstroms durch die Laval-Düse, Anstellwinkel der Laval-Düse) des Sauerstoffstrahls, beispielsweise in Abhängigkeit der Eigenschaften der Schmelze, vorgegeben bzw. vorberechnet werden, wonach der Sauerstoffinjektor unter Berücksichtigung der Strahlparameter an der Seitenwand angeordnet werden kann.

Das Anordnen des Sauerstoffinjektors an dem metallurgischen Schmelzaggregat kann beispielsweise dadurch erfolgen, dass zunächst das Injektorgehäuse an der Seitenwand angebracht wird, wonach der Sauerstoffinjektor von außen in das Injektorgehäuse eingebracht und dort befestigt wird. Alternativ können das Injektorgehäuse und der Sauerstoffinjektor vorab zu einer Baugruppe miteinander verbunden, die anschließend an der Seitenwand abgebracht wird. Alternativ können die Seitenwand, das Injektorgehäuse und der Sauerstoffinjektor abseits des metallurgischen Schmelzaggregats zu einer Baugruppe miteinander verbunden werden, die anschließend an dem übrigen metallurgischen Schmelzaggregat befestigt wird.

Zur Montage des Injektorgehäuses an der Seitenwand kann das Injektorgehäuse von außerhalb des metallurgischen Schmelzaggregats beispielsweise mittels eines Gabelstaplers, eines Krans oder eines anderen Hilfsmittels an die Seitenwand herangeführt werden und in die Injektoröffnung eingeführt werden. Dabei kann das Injektorgehäuse relativ zu der Seitenwand ausgerichtet werden. Das zur Seitenwand ausgerichtete Injektorgehäuse kann anschließend mittels mechanischer Befestigungsmittel, beispielsweise Schrauben, Bolzen oder dergleichen, an der Seitenwand befestigt werden.

Die Überschallstrahllänge, also die axiale Ausdehnung desjenigen Bereichs des aus der Laval-Düse austretenden Sauerstoffstrahls, in dem die Geschwindigkeit größer als die Schallgeschwindigkeit ist, endet in einem Übergangspunkt, der durch Ma = 1 gekennzeichnet ist, und nach dessen Passieren die Geschwindigkeit des Sauerstoffs im Unterschallbereich liegt. Bei einem kalten Sauerstoffstrahl, der beispielsweise in eine heiße Umgebung mit etwa 1650 °C eintritt, kann die Überschallstrahllänge etwa das 30-fache des Düsenaustrittsdurchmessers der Auslassöffnung der Laval-Düse betragen. Für eine Lavaldüse, die mit einem Druck von p = 10 bar betrieben wird und die dabei einen Sauerstoffvolumenstrom von *V̇* = 2000 Nm³/h fördert, ergibt sich bei einem ausgelegten Austrittsdurchmesser der Laval-Düse von D = 28.1 mm folglich eine Überschallstrahllänge von L^{*} = 843 mm (L*/D = 30).

Bei dem oben mit Bezug auf DE 10 2013 226 109 A1 beschriebenen Prinzip des koaxialen Hüllgasstrahls um den Sauerstoffstrahl verlängert der heiße Abgasstrahl, der durch interne Verbrennung von Brenngas und Oxidator im Inneren des Injektors entsteht, die Überschallstrahllänge um etwa 30 % bis 40 %. Für die oben beschriebenen Parameter der Laval-Düse ergibt sich eine Überschallstrahllänge L^{*} von L^{*} = 1110 mm (L*/D = 39.5), d. h. L* ist gegenüber dem konventionellen Injektor um 32 % verlängert.

Gemäß der Erfindung nach dem unabhängigen Anspruch 1 wird die Einbauhöhe aus der Formel *H = a · p²* + *b · p* + c *·V̇² + d -V̇ + e · a + f* ermittelt, wobei a, *b,* c, *d, e* und *f* konstante Faktoren sind und p der Sauerstoffdruck in dem Einlassbereich der Laval-Düse, V̇ der Sauerstoffvolumenstrom durch die Laval-Düse und α der Anstellwinkel der Laval-Düse ist, und wobei der Sauerstoffdruck in dem Einlassbereich der Laval-Düse in dem Bereich von 8 bar ≤ *p* ≤ 12 bar liegt, der Sauerstoffvolumenstrom durch die Laval-Düse in dem Bereich 1400 Nm³/h ≤ V̇ ≤ 4400 Nm³/h liegt und der Anstellwinkel in dem Bereich 40° ≤ *α* ≤ 45° liegt. Diese Formel stellt einen mathematischen Zusammenhang zwischen der Einbauhöhe und den Strahlparametern her und vereinfacht somit die Ermittlung der Einbauhöhe stark.

Gemäß einer weiteren vorteilhaften Ausgestaltung wird der Sauerstoffinjektor derart angeordnet, dass ein mit einer in einem Überschallbereich liegenden Geschwindigkeit aus dem Sauerstoffinjektor austretender Sauerstoffstrahl erst dann auf die Oberfläche der Schmelze auftrifft, nachdem die Geschwindigkeit des Sauerstoffstrahls in dem Unterschallbereich liegt. Dadurch wird ein intensives Splashing bzw. Verspritzen der Schmelze beim Bestrahlen mit dem Sauerstoffstrahl vermieden. Der Strahlimpuls des Sauerstoffstrahls ist auch im Unterschallbereich noch ausreichend hoch, um eine intensive Vermischung der Schmelze und damit die gewünschte chemische Reaktion zwischen Schmelze und Sauerstoff zu garantieren.

Gemäß einer weiteren vorteilhaften Ausgestaltung wird der Sauerstoffinjektor derart angeordnet, dass sich der Überschallbereich des aus dem Sauerstoffinjektor austretende Sauerstoffstrahls - ausgehend von der Auslassöffnung der Laval-Düse - über eine Überschallstrahlstrecke der Länge bis zu einem Übergangspunkt erstreckt, dass sich der Unterschallbereich des Sauerstoffstrahls - ausgehend von dem Übergangspunkt - über eine sich in Strahlrichtung an die Überschallstrahlstrecke anschließende Unterschallstrecke der Länge bis auf die Oberfläche der Schmelze erstreckt, dass der Übergangspunkt dadurch definiert ist, dass bei ihm die Geschwindigkeit des Sauerstoffstrahls Ma = 1 beträgt, und dass die Länge der Unterschallstrahlstrecke zwischen 50% und 150% der Länge der Überschallstrahlstrecke beträgt. Die Unterschallstrahlstrecke kann unter Berücksichtigung des gewünschten Sauerstoffeintrags in die Schmelze festgelegt werden.

Ein metallurgisches , welches nicht Teil der Erfindung ist, weist wenigstens eine Seitenwand mit wenigstens einer Injektoröffnung, wenigstens ein Injektorgehäuse mit einer Auslassöffnung, das von außerhalb des Schmelzaggregats an der Injektoröffnung angeordnet ist und teilweise nach innen in das Schmelzaggregat hineinragt, und wenigstens einen in dem Injektorgehäuse angeordneten, eine Laval-Düse aufweisenden Sauerstoffinjektor auf, wobei eine Einbauhöhe einer Auslassöffnung der Laval-Düse über einer Oberfläche einer in dem Schmelzaggregat enthaltenen Schmelze der Formel *H* = *a p*² + *b* · *p* + *c* · *V̇*² + *d* · *V̇* + *e* · *a* + *f* genügt, wobei *a*, *b, c, d, e* und *f* konstante Faktoren sind und p der Sauerstoffdruck in dem Einlassbereich der Laval-Düse, *V̇* der Sauerstoffvolumenstrom durch die Laval-Düse und α der Anstellwinkel der Laval-Düse ist, und wobei der Sauerstoffdruck in dem Einlassbereich der Laval-Düse in dem Bereich von 8 bar ≤ *p* ≤ 12 bar liegt, der Sauerstoffvolumenstrom durch die Laval-Düse in dem Bereich 1400 Nm³/h ≤ *V̇* ≤ 4400 Nm³/h liegt und der Anstellwinkel in dem Bereich 40° ≤ α ≤ 45° liegt.

Mit dem metallurgischen Schmelzaggregat sind die oben mit Bezug auf das Verfahren genannten Vorteile entsprechend verbunden. Insbesondere kann das metallurgische Schmelzaggregat zur Durchführung des Verfahrens gemäß einer der oben genannten Ausgestaltungen oder einer Kombination von wenigstens zwei dieser Ausgestaltungen miteinander eingesetzt werden.

Die Seitenwand kann beispielsweise als Feuerfest-Panel, als gekühltes Rohrpanel oder als gekühltes Sprühkühlpanel ausgebildet sein. Als Kühlmedium kommt beispielsweise Wasser mit oder ohne Zusatz in Frage. Zudem kann zum Kühlen das beispielsweise aus AT 508 292 B1 bekannte Kühlmedium eingesetzt werden.

Das Injektorgehäuse kann teilweise oder vollständig aus Kupfer, Stahl oder einer Kupfer-Stahl-Mischung hergestellt sein. Das Injektorgehäuse kann unter Verwendung eines Gießverfahrens, eines Schweißverfahrens und/oder eines additiven Fertigungsverfahrens (z.B. 3D-Druck) hergestellt sein. Das Injektorgehäuse kann einen zumindest teilweise umlaufend angeordneten Befestigungsflansch aufweisen, der an einer Außenseite der Seitenwand abgestützt ist und über den das Injektorgehäuse von außen an der Seitenwand befestigt werden kann.

Vorzugsweise ist das Injektorgehäuse derart an der Seitenwand angeordnet, dass der in das metallurgische Schmelzaggregat hineinragende Teil des Injektorgehäuses sich in einem Abstand zu einer Feuerfestauskleidung eines Herds des metallurgischen Schmelzaggregats angeordnet ist bzw. nicht direkt auf der Feuerfestauskleidung aufsitzt. Der Abstand zwischen dem Injektorgehäuse und der Feuerfestauskleidung kann beispielsweise in einem Bereich von 10 mm bis 600 mm liegen. Ein umlaufender Spalt zwischen dem Injektorgehäuse und der Seitenwand kann beispielsweise mittels eines Feuerfestmaterials abgedichtet sein.

Der Sauerstoffinjektor kann entsprechend dem in DE 10 2013 226 109 A1 offenbarten Injektor ausgebildet sein.

Der Sauerstoffinjektor ist derart angeordnet, dass ein mit einer in einem Überschallbereich liegenden Geschwindigkeit aus dem Sauerstoffinjektor austretender Sauerstoffstrahl erst dann auf die Oberfläche der Schmelze auftrifft, nachdem die Geschwindigkeit des Sauerstoffstrahls in dem Unterschallbereich liegt. Mit dieser Ausgestaltung sind die oben mit Bezug auf die entsprechende Ausgestaltung des Verfahrens genannten Vorteile entsprechend verbunden.

Der Sauerstoffinjektor ist derart angeordnet, dass sich der Überschallbereich des aus dem Sauerstoffinjektor austretende Sauerstoffstrahls - ausgehend von der Auslassöffnung der Laval-Düse - über eine Überschallstrahlstrecke der Länge bis zu einem Übergangspunkt erstreckt, dass sich der Unterschallbereich des Sauerstoffstrahls - ausgehend von dem Übergangspunkt - über eine sich in Strahlrichtung an die Überschallstrahlstrecke anschließende Unterschallstrecke der Länge bis auf die Oberfläche der Schmelze erstreckt, dass der Übergangspunkt dadurch definiert ist, dass bei ihm die Geschwindigkeit des Sauerstoffstrahls Ma = 1 beträgt, und dass die Länge der Unterschallstrahlstrecke zwischen 50% und 150% der Länge der Überschallstrahlstrecke beträgt. Mit dieser Ausgestaltung sind die oben mit Bezug auf die entsprechende Ausgestaltung des Verfahrens genannten Vorteile entsprechend verbunden.

Im Folgenden wird die Erfindung unter Bezugnahme auf die anliegende Figur anhand einer bevorzugten Ausführungsform beispielhaft erläutert, wobei die nachfolgend erläuterten Merkmale sowohl jeweils für sich genommen als auch in Kombination von wenigstens zwei dieser Merkmale miteinander einen vorteilhaften oder weiterbildenden Aspekt der Erfindung darstellen können. Es zeigt:

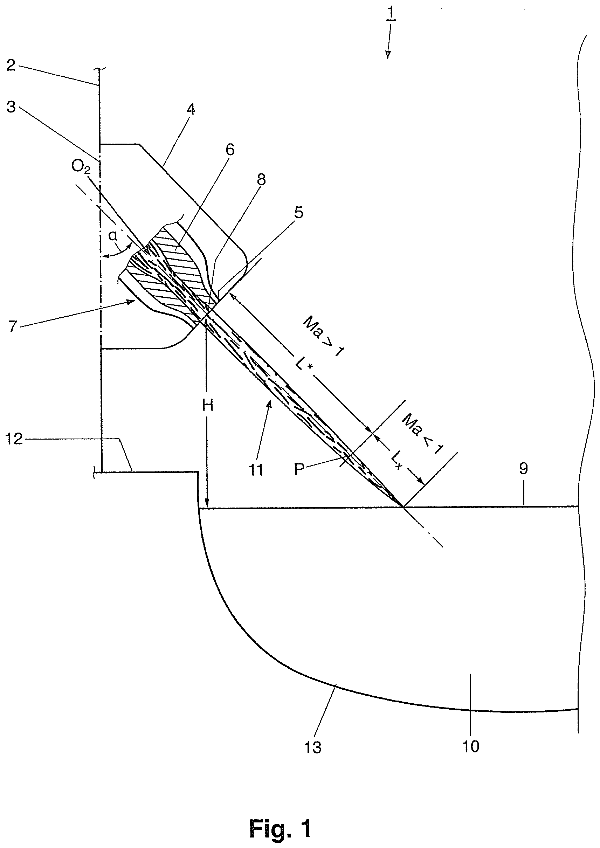

- Figur 1:: eine schematische Detaildarstellung eines Ausführungsbeispiels für ein erfindungsgemäßes metallurgisches Schmelzaggregat.

Figur 1 zeigt eine schematische Detaildarstellung eines Ausführungsbeispiels für ein metallurgisches Schmelzaggregat 1 mit einer Seitenwand 2 mit einer Injektoröffnung 3, einem Injektorgehäuse 4 mit einer Auslassöffnung 5, das von außerhalb des Schmelzaggregats 1 an der Injektoröffnung 3 angeordnet ist und teilweise nach innen in das Schmelzaggregat 1 hineinragt, und einem in dem Injektorgehäuse 4 angeordneten, eine Laval-Düse 6 aufweisenden Sauerstoffinjektor 7. Das Injektorgehäuse 4 ist in einem Abstand oberhalb einer eine Stufe 12 definierenden, nicht gezeigten Feuerfestauskleidung eines Untergefäßes 13 des Schmelzaggregats 1 angeordnet.

Eine Einbauhöhe H einer Auslassöffnung 8 der Laval-Düse 6 über einer Oberfläche 9 einer in dem Schmelzaggregat 1 enthaltenen Schmelze 10 genügt der Formel *H* = *a · p*² + *b* · *p* + *c* · *V̅*² + *d - V̅* + *e* · *a* + *f*, wobei *a*, *b, c, d, e* und *f* konstante Faktoren sind und p der Sauerstoffdruck in einem Einlassbereich der Laval-Düse 6, *V̇* ein Sauerstoffvolumenstrom durch die Laval-Düse 6 und *α* ein Anstellwinkel der Laval-Düse 6 ist, und wobei der Sauerstoffdruck p in dem Einlassbereich der Laval-Düse 6 in einem Bereich von 8 bar ≤ p ≤ 12 bar liegt, der Sauerstoffvolumenstrom *V̇* durch die Laval-Düse 6 in einem Bereich 1400 Nm³/h ≤ *V̇* ≤ 4400 Nm³/h liegt und der Anstellwinkel *α* in einem Bereich 40° ≤ α ≤ 45° liegt. Die Konstante α kann in einem Bereich von -1,2 · 10⁻⁴ bis —3,7 · 10⁻⁴ liegen. Die Konstante b kann in einem Bereich von 1,8 ·10⁻² bis 5,5 · 10⁻² liegen. Die Konstante c kann in einem Bereich von -3,1 · 10⁻⁹ bis -9,3 · 10⁻⁹ liegen. Die Konstante d kann in einem Bereich von 1,3 · 10⁻⁴ bis 4,0 · 10⁻⁴ liegen. Die Konstante e kann in einem Bereich von 1,5 · 10⁻² bis 4,5 · 10⁻² liegen. Die Konstante *f* kann in einem Bereich von -4,1 · 10⁻¹ bis -1,2 · 10⁰ liegen.

Der Sauerstoffinjektor 7 ist derart angeordnet, dass ein mit einer in einem Überschallbereich liegenden Geschwindigkeit aus dem Sauerstoffinjektor 7 austretender Sauerstoffstrahl 11 erst dann auf die Oberfläche 9 der Schmelze 10 auftrifft, nachdem die Geschwindigkeit des Sauerstoffstrahls 11 in dem Unterschallbereich liegt.

Insbesondere ist der Sauerstoffinjektor 7 derart angeordnet, dass eine Länge Lx einer Unterschallstrahlstrecke, die in Strahlrichtung des Sauerstoffstrahls 11 verläuft, der von dem Sauerstoffinjektor 7 abgegeben wird, und die sich von einem Übergangspunkt P, bei dem die Geschwindigkeit des Sauerstoffstrahls 11 Ma = 1 beträgt, zu der Oberfläche 9 der Schmelze 10 erstreckt, zwischen 50% und 150% einer Länge L* einer Überschallstrahlstrecke entspricht, die in Strahlrichtung des Sauerstoffstrahls 11 verläuft und die sich von der Auslassöffnung 8 der Laval-Düse 6 zu dem Übergangspunkt P erstreckt.

### Bezugszeichenliste

- 1: Schmelzaggregat
- 2: Seitenwand
- 3: Injektoröffnung
- 4: Injektorgehäuse
- 5: Auslassöffnung von 4
- 6: Laval-Düse
- 7: Sauerstoffinjektor
- 8: Auslassöffnung von 6
- 9: Oberfläche von 10
- 10: Schmelze
- 11: Sauerstoffstrahl
- 12: Stufe
- 13: Untergefäß
- H: Einbauhöhe
- Lx: Unterschallstrahllänge
- L*: Überschallstrahllänge
- P: Punkt (Ma = 1)
- *α*: Anstellwinkel von 6

## Patentansprüche

1. Verfahren zum Anordnen eines eine Laval-Düse (6) aufweisenden Sauerstoffinjektors (7) an einer Seitenwand (2) eines metallurgischen Schmelzaggregats (1), wobei der Sauerstoffinjektor (7) in einem Injektorgehäuse (4) mit einer Auslassöffnung (5) angeordnet wird, das derart von außerhalb des Schmelzaggregats (1) an einer Injektoröffnung (3) an der Seitenwand (2) angeordnet wird, dass das Injektorgehäuse (4) teilweise nach innen in das Schmelzaggregat (1) hineinragt, wobei eine Einbauhöhe (H) einer Auslassöffnung (8) der Laval-Düse (6) über einer Oberfläche (9) einer in dem Schmelzaggregat (1) enthaltenen Schmelze (10) unter Berücksichtigung eines Sauerstoffdrucks in einem Einlassbereich der Laval-Düse (6), eines Sauerstoffvolumenstroms durch die Laval-Düse (6) und eines Anstellwinkels (a) der Laval-Düse (6) ermittelt wird und der Sauerstoffinjektor (7) in Abhängigkeit der ermittelten Einbauhöhe (H) an der Seitenwand (2) angeordnet wird, wobei die Einbauhöhe (H) aus der Formel *H* = *a · p*² + *b* · *p* + *c* · *V̇*² + *d* · *V̇* + *e · a* + *f* ermittelt wird, wobei *a*, *b, c, d, e* und *f* konstante Faktoren sind und p der Sauerstoffdruck in dem Einlassbereich der Laval-Düse (6), V̇ der Sauerstoffvolumenstrom durch die Laval-Düse (6) und α der Anstellwinkel der Laval-Düse (6) ist, wobei der Sauerstoffdruck in dem Einlassbereich der Laval-Düse (6) in dem Bereich von 8 bar ≤ p ≤ 12 bar liegt, der Sauerstoffvolumenstrom durch die Laval-Düse (6) in dem Bereich 1400 Nm³/h ≤ *V̇* ≤ 4400 Nm³/h liegt und der Anstellwinkel (a) in dem Bereich 40° ≤ *α* ≤ 45° liegt, wobei die Konstante a in einem Bereich von -1,2 · 10⁻⁴ bis -3,7 · 10⁻⁴ liegt, die Konstante b in einem Bereich von 1,8 · 10⁻² bis 5,5 · 10⁻² liegt, die Konstante c in einem Bereich von -3,1 · 10⁻⁹ bis -9,3 · 10⁻⁹ liegt, die Konstante d in einem Bereich von 1,3 - 10⁻⁴ bis 4,0 · 10⁻⁴ liegt, die Konstante e in einem Bereich von 1,5 · 10⁻² bis 4,5 · 10⁻² liegt und die Konstante f in einem Bereich von -4,1 · 10⁻¹ bis -1,2 · 10⁰ liegt.

2. Verfahren nach Anspruch 1, **dadurch gekennzeichnet, dass** der Sauerstoffinjektor (7) derart angeordnet wird, dass ein mit einer in einem Überschallbereich liegenden Geschwindigkeit aus dem Sauerstoffinjektor (7) austretender Sauerstoffstrahl (11) erst dann auf die Oberfläche (9) der Schmelze (10) auftrifft, nachdem die Geschwindigkeit des Sauerstoffstrahls (11) in dem Unterschallbereich liegt.

3. Verfahren nach Anspruch 2, **dadurch gekennzeichnet, dass** der Sauerstoffinjektor (7) derart angeordnet wird,
dass sich der Überschallbereich des aus dem Sauerstoffinjektor (7) austretende Sauerstoffstrahls - ausgehend von der Auslassöffnung (8) der Laval-Düse (6) - über eine Überschallstrahlstrecke der Länge (L*) bis zu einem Übergangspunkt (P) erstreckt;
dass sich der Unterschallbereich des Sauerstoffstrahls - ausgehend von dem Übergangspunkt (P) - über eine sich in Strahlrichtung an die Überschallstrahlstrecke anschließende Unterschallstrecke der Länge (Lx) bis auf die Oberfläche der Schmelze (10) erstreckt;
dass der Übergangspunkt (P) dadurch definiert ist, dass bei ihm die Geschwindigkeit des Sauerstoffstrahls (11) Ma = 1 beträgt; und
dass die Länge (Lx) der Unterschallstrahlstrecke zwischen 50% und 150% der Länge (L*) der Überschallstrahlstrecke beträgt.

## Claims

1. Method of arranging an oxygen injector (7), which comprises a Laval nozzle (6), at a side wall (2) of a metallurgical smelting unit (1), wherein the oxygen injector (7) is arranged in an injector housing (4) with an outlet opening (5), which is so arranged from outside the smelting unit (1) at the side wall (2) at an injector opening (3) that the injector housing (4) projects partly inwardly into the smelting unit (1), wherein an installation height (H) of an outlet opening (8) of the Laval nozzle (6) above a surface (9) of a melt (10) present in the smelting unit (1) is determined with consideration of an oxygen pressure in an inlet region of the Laval nozzle (6), an oxygen volume flow through the Laval nozzle (6) and an incidence angle (a) of the Laval nozzle (6) and the oxygen injector (7) is arranged at the side wall (2) in dependence on the determined installation height (H), wherein the installation height (H) is determined by the formula *H* = *a* · *p*² + *b* · *p* + *c* · *V̇* + *d* · *V̇* + *e* · *α* + *f*, wherein a, *b, c, d* e and f are constant factors and p is the oxygen pressure in the inlet region of the Laval nozzle (6), V̇ is the oxygen volume flow through the Laval nozzle (6) and *α* is the incidence angle of the Laval Nozzle (6), wherein the oxygen pressure in the inlet region of the Laval nozzle (6) lies in the range of 8 bars ≤ p ≤ 12 bars, the oxygen volume flow through the Laval nozzle (6) lies in the range of 1400 Nm³/h ≤ *V̇* 4400 Nm³/h and the incidence angle (a) lies in the range of 40° ≤ *α* ≤ 45°, wherein the constant a lies in a range of -1.2 · 10⁻⁴ to -3.7 · 10⁻⁴, the constant b lies in a range of 1.8 · 10⁻² to 5.5 · 10⁻², the constant c lies in a range of -3.1 · 10⁻⁹ to 9.3 · 10⁻⁹, the constant d lies in a range of 1.3 · 10⁻⁴ to 4.0 · 10⁻⁴, the constant e lies in a range of 1.5 · 10⁻² to 4.5 · 10⁻² and the constant *f*lies in a range of -4.1 · 10⁻¹ to 1.2 · 10⁰.

2. Method according to claim 1, **characterised in that** the oxygen injector (7) is so arranged that an oxygen jet (11) exiting the oxygen injector (7) at a velocity lying in a supersonic range is incident on the surface (9) of the melt (10) only after the velocity of the oxygen jet (11) lies in the subsonic range.

3. Method according to claim 2, **characterised in that** the oxygen injector (7) is so arranged that
the supersonic range of the oxygen jet exiting the oxygen injector (7) extends, starting from the outlet opening (8) of the Laval nozzle (6), over a supersonic jet path of the length (L*) up to a transition point (P);
the subsonic range of the oxygen jet extends, starting from the transition point (P), over a subsonic path, which adjoins the supersonic path in jet direction, of the length (Lx) up to the surface of the melt (10);
the transition point (P) is defined **in that** the velocity of the oxygen jet (11) thereat is Ma = 1; and
the length (Lx) of the subsonic path is between 50% and 150% of the length (L*) of the supersonic jet path.

## Revendications

1. Procédé de disposition d'un injecteur d'oxygène (7) comportant une tuyère de Laval (6) sur la paroi latérale (2) d'un agrégat de fusion métallurgique (1), par lequel l'injecteur d'oxygène est disposé dans un boitier d'injecteur (4) pourvu d'un orifice de sortie (5), qui est disposé à l'extérieur de l'agrégat de fusion (1) à une ouverture de l'injecteur (3) sur la paroi latérale (2) de sorte que le boîtier de l'injecteur (4) s'étende partiellement vers l'intérieur dans l'agrégat de fusion (1), dans lequel la hauteur d'installation (H) d'un orifice de sortie (8) de la tuyère de Laval (6) au-dessus d'une surface (9) d'un métal en fusion (10) contenu dans l'agrégat de fusion (1) est calculée en prenant en considération une pression de l'oxygène dans une zone d'entrée de la tuyère de Laval (6), un débit volumétrique d'oxygène à travers la tuyère de Laval (6) et un angle d'incidence (α) de la tuyère de Laval (6), et l'injecteur d'oxygène (7) est disposé sur la paroi latérale (2) en fonction de la hauteur d'installation calculée (H), où la hauteur d'installation (H) est calculée à l'aide de la formule H = *a* · *p*² + *b* · *p* + *c · V̇*² + *d · V̇* + *e* · α + *f,* où a, *b, c, d,* e et f représentent des constantes et p est la pression de l'oxygène dans la zone d'entrée de la tuyère de Laval (6), V représente le débit volumétrique d'oxygène à travers la tuyère de Laval (6) et α représente l'angle d'incidence de la tuyère de Laval (6), la pression de l'oxygène dans la zone d'entrée de la tuyère de Laval (6) étant comprise dans l'intervalle 8bar ≤ p ≤ 12bar, le débit volumétrique d'oxygène à travers la tuyère de Laval (6) étant compris dans l'intervalle 1400Nm³/h ≤ *V̇* ≤ 4400Nm³/h et l'angle d'incidence (α) étant compris dans l'intervalle 40° ≤ α ≤ 45°, où la constante a est comprise entre -1,2 • 10⁻⁴ et -3,7 • 10⁻⁴, la constante b est comprise entre 1,8 · 10⁻² et 5,5 · 10⁻², la constante c entre -3,1 · 10⁻⁹ et -9,3 · 10⁻⁹, la constante d étant comprise entre1,3 • 10⁻⁴ et 4,0•10⁻⁴, la constante e est comprise entre 1,5 • 10⁻² et 4,5 • 10⁻², et la constante *f* est comprise entre -4,1 • 10⁻¹et-1,2 •10⁶.

2. Procédé selon la revendication 1, **caractérisé en ce que** l'injecteur d'oxygène (7) est disposé de sorte qu'un jet d'oxygène (11) libéré par l'injecteur d'oxygène (7) à une vitesse du domaine supersonique frappe contre la surface (9) du métal en fusion (10) uniquement après que la vitesse du jet d'oxygène (11) est redescendue dans le domaine subsonique.

3. Procédé selon la revendication 2, **caractérisé en ce que** l'injecteur d'oxygène (7) est disposé de sorte que
le domaine supersonique du jet d'oxygène qui sort de l'injecteur d'oxygène (7)
- en partant de l'orifice de sortie (8) de la tuyère de Laval (6) - s'étend sur une trajectoire supersonique du jet de longueur (L*) jusqu'à un point de transition (P) ; le domaine subsonique du jet d'oxygène - en partant du point de transition (P)
- s'étend sur un domaine subsonique de longueur (Lx) qui suit le domaine supersonique du jet sur la trajectoire du jet vers la surface de fonte (10);
le point de transition (P) est défini de sorte que la vitesse du jet d'oxygène (11) dans ce point est Ma = 1 ; et
la longueur (Lx) de la trajectoire du jet subsonique est comprise entre 50 % et 150 % de la longueur (L*) de la trajectoire du jet supersonique.
